# EUROPÄISCHE PATENTSCHRIFT

(11) **EP 4 010 189 B1**
(45) Veröffentlichungstag und Bekanntmachung des Hinweises auf die Patenterteilung: **05.06.2024**
(21) Anmeldenummer: 20739644.1
(22) Anmeldetag: 09.07.2020
(51) Int. Cl.: B32B 21/02, B32B 21/04, B27N 3/02, B27N 3/14, B27N 3/18, B27N 3/28, B27N 7/00, E04C 2/16, B27N 3/04

(54) **WERKSTOFFPLATTE, VERFAHREN UND ANLAGE ZUR HERSTELLUNG EINER WERKSTOFFPLATTE SOWIE VERWENDUNG EINER WERKSTOFFPLATTE**
MATERIAL BOARD, METHOD AND SYSTEM FOR PRODUCING A MATERIAL BOARD, AND USE OF A MATERIAL BOARD
PANNEAU DE MATÉRIAU, PROCÉDÉ ET SYSTÈME DE PRODUCTION D'UN PANNEAU DE MATÉRIAU, ET UTILISATION D'UN PANNEAU DE MATÉRIAU

(30) Priorität: 08.08.2019 DE 102019121476
(43) Veröffentlichungstag der Anmeldung: 15.06.2022
(73) Patentinhaber: Siempelkamp Maschinen- und Anlagenbau GmbH, 47803 Krefeld (DE)
(72) Erfinder: CONRAD, Hans-Rolf, 41539 Dormagen (DE); HÜNEKE, Jörg Heinz, 47798 Krefeld (DE); MALINDRETOS, Lars, 47804 Krefeld (DE)
(74) Vertreter: Andrejewski - Honke Patent- und Rechtsanwälte Partnerschaft mbB
(86) Internationale Anmeldenummer: PCT/EP2020/069446
(87) Internationale Veröffentlichungsnummer: WO 2021/023469

(56) Entgegenhaltungen:
- EP-A1- 2 865 501
- CN-A- 108 162 122
- DE-A1-102006 018 277
- JP-A- 2002 086 617

## Beschreibung

Die Erfindung betrifft eine Werkstoffplatte, die einen Kern sowie eine erste Deckschicht und eine zweite Deckschicht aufweist, die jeweils aus Lignin haltigen Partikeln und einem Bindemittel gebildete Gemisch gebildet sind, das in einem chemischen und/oder mechanischen Bindungsprozess zu einem Festkörpergefüge ausgebildet ist.

Die Erfindung betrifft weiter ein Verfahren zur Herstellung einer Werkstoffplatte die einen Kern sowie eine erste Deckschicht und eine zweite Deckschicht aufweist, die jeweils aus Lignin haltigen Partikeln und einem Bindemittel gebildeten Gemisch gebildet sind, dass in einem chemischen und/oder mechanischen Bindungsprozess unter Einwirkung von Druck und Temperatur zu einem Festkörpergefüge ausgebildet wird.

Die Erfindung betrifft ferner eine Verwendung einer Werkstoffplatte für den Wohnungsinnenausbau.

Es wird eine Anlage zum Herstellen einer Werkstoffplatte, mit zumindest einer Formstation zur Erzeugung einer mehrschichtigen Pressgutmatte auf einem Formband und zumindest einer Presse zum Verpressen der Pressgutmatte unter Anwendung von Druck und Wärme unter Bildung der Werkstoffplatte offenbart.

Die Herstellung von Werkstoffplatten findet entweder taktgebunden oder kontinuierlich statt. Bei einer taktgebundenen Herstellung werden die Werkstoffplatten als flächenförmige Gegenstände mit in allen drei Raumrichtungen endlichen Abmaßen erzeugt, während die Werkstoffplatten die in einem kontinuierlichen Prozess erzeugt werden, Ablängungen einer lediglich in zwei Raumrichtungen endliche Abmaße aufweisenden Bahnware darstellen. Dabei gibt die Arbeitsweise der Füge- und/oder Verdichtungseinheit vor, ob der Gesamtprozess als taktgebundenes oder kontinuierliches Verfahren beschrieben wird. Da in den Verdichtungseinheiten, respektive den kombinierten Füge-und Verdichtungseinheiten im Allgemeinen bei der Werkstoffplattenerzeugung auch mit nennenswerten Drücken gearbeitet wird, werden diese Einheiten vom Fachmann meist mit Bezug auf eine Gesamtanlage als Pressenteil bezeichnet. Bei der Erzeugung von Werkstoffplatten i.S.d. vorliegenden Schrift liegen die Arbeitsdrücke hier, abhängig von Material und Größe der zu erzeugenden Werkstoffplatte, meist in Bereichen zwischen etwa 50 N/cm² und ca. 500 N/cm² und dort vorteilhafterweise zwischen 100 N/cm² und 400 N/cm².

Sowohl in wirtschaftlicher Hinsicht, wie im Hinblick auf ihre technische Einsatzfähigkeit nehmen Holzwerkstoffplatten unter den Werkstoffplatten einen besonderen Stellenwert ein. Holzwerkstoffplatten werden in den unterschiedlichsten Ausführungsformen für unterschiedliche Anwendungszwecke hergestellt. Besonders weit verbreitet sind Spanplatten, OSB-Platten und MDF-Platten, sowie aus einzelnen Schichten derartiger Verbunde aufgebaute Hybridplatten.

Diese Platten werden üblicherweise aus Holzpartikeln unterschiedlicher Form und Größe hergestellt, wobei die Holzpartikel durch Stimmulierung eigener Adhäsionsmechanismen und Zugabe von Klebstoffen (i.d.R. eines Leimes) verbunden werden.

In jüngerer Zeit ist man bestrebt neben den zum Nachwachsen viele Jahre benötigenden Holzwerkstoffen auch Einjahrespflanzen, insbesondere grasartige Pflanzen, zur Produktion von Werkstoffplatten zu benutzen. So sind aus dem Stand der Technik auch mehrschichtig aufgebautete Werkstoffplatten bekannt, deren einzelne Schichten aus Einjahrespflanzen bestehen.

Allerdings gestaltet sich die Verarbeitung von Einjahrespflanzen deutlich komplizierter als die auf Holzpartikeln basierenden Werkstoffplatten. So bildet die hohe Ausscheidung von im Herstellungsprozess abrasiv auf den Anlagenbau wirkender Silikate ein großes Hemmnis.

Zudem unterscheiden sich insbesondere auch die mechanischen Eigenschaften von aus Einjahrespflanzen hergestellten Partikeln basierenden Platten(-schichten) zu denjenigen aus auf Holzpartikeln basierenden Pendants.

Dennoch liegt ein Fokus aktueller Entwicklungen auf der Bereitstellung von auf Einjahrespflanzen basierenden Werkstoffplatten.

Einen weiteren Trend -nämlich OSB-Platten mit einer Spandeckschicht zu versehen, um die im Trockenausbau insbesondere im Wohngebäudebau verwendeten Platten einfach dekorierbar (streichbar, tapezierbar) zu gestelten - damit verknüpfend schlägt die DE 10 2015 120 653 A1 eine Werkstoffplatte vor, die eine MDF-, Span oder OSB Mittelschicht aufweist, die wenigstens eine gegenüber der Mittelschicht dünne Deckschicht umfasst, die aus Strohpartikeln gebildet ist, deren Partikelgröße klassiert zur Oberfläche hin abnimmt.

Nachteilig bei einer solchen Platte ist vor allem, dass die mechanischen Eigenschaften der OSB-Mittelschicht durch die beschriebene Deckschicht herabgesetzt werden und der Betreiber einer Anlange zur Erzeugung derartiger Platten dennoch mit den Problemen die mit der Verarbeitung von Partikeln aus Einjahrespflanzen verbunden sind konfrontiert ist, selbst wenn die zu verarbeitenden Mengen auf Grund des geringen Volumens der zu erzeugenden dünnen Deckschichten klein sind.

DE102006018277 A1 offenbart eine Werkstoffplatte mit einem Kern aus Holzwerkstoff und zwei den Kern zur Oberseite und zur Unterseite abdeckenden WPC Deckschichten und ein Verfahren zur Herstellung einer solchen Werkstoffplatte.

Demnach besteht eine Aufgabe der Erfindung darin, eine Werkstoffplatte bereit zu stellen, die aus ökologischen und ökonomischen Gründen einen hohen Anteil Einjahrespflanzen basierter Partikel aufweist und dennoch gute mechanische Eigenschaften aufweist. Eine weitere Aufgabe der Erfindung kann darin gesehen werden, die Anlagenbelastung im Herstellungsprozess verhältnismäßig gering zu gestalten. Eine weitere Aufgabe kann darin gesehen werden, den Abschliffanteil gering zu halten.

Die Aufgabe der Erfindung wird hinsichtlich einer Werkstoffplatte der eingangs genannten Art dadurch gelöst, dass die dem Gemisch des Kerns zugehörigen Partikel zu mindestens 70%, vorzugsweise zu mindestens 80% ganz vorzugsweise zu mindestens 90% aus Einjahrespflanzen gewonnen sind, und dass die den Gemische der beiden Deckschichten zugehörigen Partikel zu mindestens 70%, vorzugsweise zu mindestens 80% ganz vorzugsweise zu mindestens 90% aus Holz gewonnen sind. Eine derartig gestaltete Werkstoffplatte bietet nicht nur aus ökologischen und ökonomischen Gesichtspunkten große Vorteile, da der den größten Gewichts- und Volumenanteil bildende Kern aus rasch nachwachsenden Rohstoffen gebildet ist, die weltweit rasch, kostengünstig und ohne hohen Transportaufwand verfügbar sind und eine derartige Werkstoffplatte zudem hohe Festigkeitswerte, insbesondere hohe Biegesteifigkeitswerte, erreichen kann.

Die Erfinder haben nämlich erkannt, dass die Belastbarkeit einer Werkstoffplatte, insbesondere bezogen auf deren Biegesteifigkeit, in besonders hohem Maß von der Gestaltung der jeweils außen liegenden Schichten, insbesondere also der jeweiligen Deckschicht(en), abhängig ist. Dazu bieten Werkstoffplatten, deren beiden äußeren Deckschichten aus einem Binder-Partikelgemisch gebildet sind, wobei die darin enthaltenen Partikel zu mindestens 70%, vorzugsweise zu mindestens 80% ganz vorzugsweise zu mindestens 90% aus Holz gewonnen sind hervorragende Voraussetzungen, auch wenn ihr Kern aus einem Binder-Partikelgemisch gebildet sind, wobei die darin enthaltenen Partikel zu mindestens 70%, vorzugsweise zu mindestens 80% ganz vorzugsweise zu mindestens 90% aus Einjahrespflanzen gewonnen sind.

Überraschender Weise hat sich in Versuchen sogar gezeigt, dass auch Werkstoffplatten, deren beiden äußeren Deckschichten aus einem Binder-Partikelgemisch gebildet sind, wobei die darin enthaltenen Partikel zu mindestens 30%, vorzugsweise zu mindestens 50% ganz vorzugsweise zu mindestens 60% aus Mehrjahrespflanzen gewonnen sind bereits sehr gute Voraussetzungen bilden, auch wenn ihr Kern aus einem Binder-Partikelgemisch gebildet sind, wobei die darin enthaltenen Partikel zu mindestens 70%, vorzugsweise zu mindestens 80% ganz vorzugsweise zu mindestens 90% aus Einjahrespflanzen gewonnen sind. Zwar können die auf diese Weise erzielbaren Steigerungen der Festigkeitswerte, insbesondere der Biegesteifigkeitswerte, gegenüber einer Werkstoffplatte die ausschließlich aus Partikel von Einjahrespflanzen hergestellt ist, noch keinen Hinweis auf die enormen Effekte geben, die diesbezüglich durch die zuvor genannten Partikelverhältnisse ab wenigsten 70% Mehrjahrespflanzenanteil erzielbar sind, jedoch können auch derartige Werkstoffplatten bereits vielen einfacheren Anwendungsfällen vollständig genügen.

Es ist dabei bevorzugt, dass die erste Deckschicht und die zweite Deckschicht einen Volumenanteil zwischen 15 % und 65 % des Volumens der Werkstoffplatte bilden. Ganz besonders bevorzugt ist dabei, dass die erste Deckschicht und die zweite Deckschicht einen Volumenanteil zwischen 25 % und 50 % und insbesondere einen Volumenanteil von 30 % bis 45 % des Volumens der Werkstoffplatte bilden.

Bei solchen Volumenanteilen können sich in üblichen Werkstoffplattenstärkebereichen zwischen etwa 8 mm und 25 mm einzelne Deckschichtstärken zwischen etwa 1,0 mm und 4,0 mm bis 4,5 mm ausgebildet sein.

Um einen möglichst hohen Volumenanteil durch die aus ökologischen und ökonomischen Gründen bevorzugt einzusetzenden, aus Einjahrespflanzen gewonnenen, Partikeln realisieren zu können, ist es in dem genannten Werkstoffplattenstärkebereich besonders zu bevorzugen, dass die Deckschichtstärken gemeinsam nicht mehr als 45 % des Volumens der Werkstoffplatte bilden und dabei insbesondere aber wenigstens 15%, vorzugsweise wenigstens 25 %, ganz vorzugsweise wenigstens 30 % des Volumens der Werkstoffplatte bilden.

Weiter ist es von Vorteil, wenn zwischen dem Kern und wenigstens einer Deckschicht eine, ein aus Lignin haltigen Partikeln und einem Bindemittel gebildeten Gemisch aufweisende, Zwischenschicht angeordnet ist, und die dem Gemisch der Zwischenschicht zugehörigen Partikel jeweils zu mindestens 5%, vorzugsweise zu mindestens 10%, ganz vorzugsweise zu mindestens 15% aus Einjahrespflanzen und aus Mehrjahrespflanzen gewonnen sind.

Man ist bestrebt, Werkstoffplatten bereit zu stellen, die bei möglichst geringem Gewicht möglichst hohe Festigkeitswerte bieten, um einerseits beispielsweise bei der Verarbeitung, gut handhabbar zu sein und andererseits die notwendigen mechanischen Anforderungen, beispielsweise für einen zweckgemäßen Einsatz, zu erfüllen.

Im Zusammenhang mit der Erkenntnis der Erfindung, dass die Belastbarkeit einer Werkstoffplatte, insbesondere bezogen auf deren Biegesteifigkeit, in besonders hohem Maß von der Gestaltung der jeweils außen liegenden Schichten, insbesondere also der jeweiligen Deckschicht(en), abhängig ist, kann es deshalb bevorzugt sein, den Kern durch ein voluminöses Gelege geringer Dichte zu bilden. Derartige Gelege weisen auf Grund ihrer großen Porigkeit an ihren Grenzschichten große Kerbwirkungen auf. Unabhängig davon, wie stark die Porigkeit des den Kern bildenden Geleges tatsächlich ausgebildet ist, kommt es nach Erkenntnis der Erfinder beispielsweise bei thermisch bedingter Ausdehnung in den Grenzbereichen zwischen Schichten die aus Einjahrespflanzenfasern gebildet sind (z.B. einem Kern) und Schichten die aus Mehrjahrespflanzenfasern gebildet sind zu erhöhten Spannungen. Diese Spannungen wirken dann als Vorspannung und begünstigt durch den relativ großem Abstand zur neutralen Schicht in erheblichem Maß mindernd auf die Belastbarkeit der Werkstoffplatte. Auch die die angesprochene Kerbwirkung greift an einer empfindlichen Stelle der Werkstoffplatte an und wirkt ebenfalls in erheblichem Maß mindernd auf die Belastbarkeit der Werkstoffplatte. Beide negativen Effekte lassen sich durch das vorsehen einer entsprechend gestalteten Zwischenschicht deutlich reduzieren, sodass bessere Eigenschaften insbesondere höhere Belastbarkeiten der Werkstoffplatte erzielbar sind.

Um den Effekt thermisch bedingter Grenzflächenspannungen entgegenzuwirken ist es deshalb auch bevorzugt, dass die dem Gemisch einer Schicht, insbesondere des Kerns, einer Deckschicht einer Zwischenschicht, zugehörigen Partikel zu mindestens zu 4%, vorzugsweise zu mindestens zu 8% ganz vorzugsweise zu mindestens zu 10% aus dem Pflanzentyp gewonnen sind, aus dem die den Großteil des Gemisches zugehörigen Partikel der ihr benachbarten Schicht gewonnen sind.

Weiter ist es von Vorteil, wenn das Gemisch des Kerns und die Gemische der Deckschichten Bindemittel aus derselben Bindemittelgruppe, vorzugsweise dasselbe Bindemittel umfassen.

Auf diese Weise kann die Belastbarkeit der Werkstoffplatte abermals erhöht werden. Auch wenn das Bindemittel dann möglicherweise nicht ideal auf die jeweiligen Partikel abgestimmt ist, ist es zu bevorzugen, dass das Gemisch des Kerns und die Gemische der Deckschichten Bindemittel aus derselben Bindemittelgruppe, vorzugsweise dasselbe Bindemittel umfassen. Insbesondere kann so verhindert werden, dass die Werkstoffplatte auf Grund von ungewollten chemischen Prozessen an Belastbarkeit verliert.

Besonders bevorzugt kann es dabei sein, dass das Gemisch des Kerns und die Gemische der Deckschichten Harnstoffharze, insbesondere Isozyanat (pMDI) umfassen. Dabei ist es zudem bevorzugt, dass deren Anteil als Feststoff Bindemittel auf Feststoff Partikel gemessen bei Schichten, die vorwiegend aus Einjahrespflanzen gewonnenen Partikel umfassen zwischen 1,5% und 6,5%, insbesondere zwischen 2% und 5%, und bei Schichten, die vorwiegend aus Mehrjahrespflanzen gewonnenen Partikel umfassen zwischen 1,5% und 7,5%, insbesondere zwischen 2% und 6%, beträgt.

In vielen Fällen ist es bevorzugt, dass der Kern als OSB-Schichttyp ausgebildet ist.

OSB-Schichttypen sind dazu geeignet besonders hohe Beiträge zur Erreichung hoher Biegesteifigkeitswerte von Werkstoffplatten beizutragen. Bei einem Kern, der Partikel umfasst, die wenigstens vorwiegend aus Einjahrespflanzen gewonnen sind, kann ein OSB-Schichttyp durch ein Gelege gespaltener Halme entstehen. Die Halme müssen dabei nicht unbedingt mittig entlang ihrer Längsachse geteilt sein. Vielmehr kann es ausreichen, dass die Halme lediglich in gespleißter Form vorliegen. Die Halme können dabei, in ursprünglicher Längsrichtung gesehen, bevorzugt Längen zwischen etwa 30 mm und 300 mm, insbesondere zwischen 60 mm und 200 mm, ganz insbesondere zwischen 70 mm und 160 mm aufweisen.

In anderen Fällen kann es dagegen bevorzugt sein, dass der Kern als MDF- oder HDF-Schichttyp ausgebildet ist.

Auch MDF- und insbesondere HDF-Schichttypen sind zur Ausbildung hoher Biegesteifigkeiten geeignet und weisen zudem den Vorteil auf, dass sie als Trägermaterial für hochfeste und dauerhaft belastbare Schraubverbindungen geeignet sind. Da Partikel aus Einjahrespflanzen besonders gut durch thermische (z.B. Kochen) und/oder chemische Prozesse gewonnen werden können und dann auch häufig weniger aggressiv auf den im Werkstoffplattenerzeugungsprozess notwendigen Anlagenbau wirken.

In wieder anderen Fällen ist es dagegen bevorzugt, dass der Kern als Span-Schichttyp ausgebildet ist.

Werkstoffplatten mit als Span-Schichttyp ausgebildeten Kernen sind besonders universell einsetzbar. Zudem kann bei abgestimmter Ausbildung der Decklagen und/oder vorgesehener Zwischenlagen eine besonders spannungsarme Werkstoffplatte erzeugt werden, deren Belastungspotential in hohem Maß von außen auf die Werkstoffplatte angreifenden Belastungen entgegensteht.

Aus Einjahrespflanzen gewonnene, als Späne ausgebildete Partikel, können dabei bevorzugt Siebdurchgangsmaße zwischen 0,5 mm und etwa 35 mm, insbesondere zwischen 2 mm und 20 mm, ganz insbesondere zwischen 3 mm und 15 mm aufweisen.

In vielen Fällen kann es bevorzugt sein, dass wenigstens eine Deckschicht als OSB-Schichttyp ausgebildet.

OSB-Schichttypen sind, wie bereits erwähnt, dazu geeignet besonders hohe Beiträge zur Erreichung hoher Biegesteifigkeitswerte von Werkstoffplatten beizutragen.

Bei einer Deckschicht, die Partikel umfasst, die wenigstens vorwiegend aus Mehrjahrespflanzen gewonnen sind, kann ein OSB-Schichttyp durch ein Gelege von sogenannten Strands oder Maxispänen entstehen, die häufig auch Flach- oder Grobspäne genannt werden. Derartige Strands weisen eine mittlere Länge von mehr als 40 mm, vorzugsweise mehr als 80 mm, z.B. 100 mm bis 300 mm oder 100 mm bis 200 mm auf, wobei die angegebenen Längenvarianzen nicht innerhalb einer Werkstoffplatte auftauchen müssen, sondern zweckbezogen innerhalb dieser Grenzen in engeren Toleranzen, beispielsweise in einem Bereich von 125 mm bis 160 mm vorliegen können.

Die mittlere Dicke beträgt mehr als 0,5 mm, z.B. 0,6 mm bis 1,7 mm, wobei auch hier die angegebenen Dickenvarianzen nicht innerhalb einer Werkstoffplatte ausgeschöpft sein müssen.

Da die Gestaltung der äußeren Deckschichten in besonderem Maß auf die Belastbarkeit der Werkstoffplatte Einfluss nimmt, sind durch die Ausbildung der Deckschichten als OSB-Schichttyp Werkstoffplatten mit besonders hohen Festigkeitswerten, insbesondere mit besonders hoher Biegesteifigkeit, herstellbar.

In anderen Fällen kann es dagegen bevorzugt sein, dass wenigstens eine Deckschicht als MDF- oder HDF-Schichttyp ausgebildet ist.

Derartige Schichten sind besonders gut bearbeitbar. So bilden MDF- und HDF-Schichten bei mechanischer Bearbeitung besonders saubere Schnittkanten aus und sind zudem durch ihre glatte Oberfläche besonders gut mit Folien zu beschichten oder zu lackieren.

In wieder anderen Fällen ist es dagegen bevorzugt, dass wenigstens eine Deckschicht als Span-Schichttyp ausgebildet ist.

Werkstoffplatten mit als Span-Schichttyp ausgebildeten Deckschichten sind besonders universell einsetzbar. Zudem kann bei abgestimmter Ausbildung der Decklagen und/oder vorgesehener Zwischenlagen eine besonders spannungsarme Werkstoffplatte erzeugt werden, deren Belastungspotential in hohem Maß von außen auf die Werkstoffplatte angreifenden Belastungen entgegensteht.

Aus Mehrjahrespflanzen gewonnene, als Späne ausgebildete Partikel, können dabei bevorzugt Siebdurchgangsmaße zwischen 0,5 mm und etwa 20 mm, insbesondere zwischen 0,5 mm und 10 mm, ganz insbesondere zwischen 0,5 mm und 3,5 mm aufweisen. Auch hier gilt, dass die Varianz der (mittleren) Längen innerhalb einer Werkstoffplatte nicht ausgeschöpft sein müssen.

In vielen Fällen kann es ferner von Vorteil sein, wenn der Kern und die ihn umgebenden Deckschichten und ggf. Zwischenschichten jeweils aus einem einheitlichen Schichttyp gebildet sind.

Derartige Werkstoffplatten sind besonders homogen. Zudem benötigen sie im Anlagebau keinen aufwendigen Upstream, da die Partikel für die unterschiedlichen Schichten im Wesentlichen nach gleicher Art und Weise erzeugbar und bearbeitbar sind. Aus diesem Grund sie derartige Werkstoffplatten wirtschaftlich günstig herstellbar.

Dagegen kann es in anderen Fällen von weiterem Vorteil sein, wenn die Werkstoffplatte wenigstens zwei unterschiedliche Schichttypen umfasst.

Derartige Werkstoffplatten bieten die Möglichkeiten vielschichtigen Anforderungsprofilen besonders gut gerecht werden können. Dabei können insbesondere der Kern und die Deckschichten gleichzeitig in mehreren der oben erläuterten Freiheitsgrade speziell auf die Erfüllung der ihnen zugedachten Aufgaben abgestimmt sein.

Hinsichtlich der Verwendung einer Werkstoffplatte für den Wohnungsausbau wird die Aufgabe der Erfindung dadurch gelöst, dass eine Werkstoffplatte gemäß einem der auf die Werkstoffplatte bezogenen Ansprüche verwendet wird.

Die sich daraus ergebenden Vorteile sind sinngemäß der Vorteilsbeschreibung der erfindungsgemäßen Werkstoffplatte und ihren bevorzugten Ausgestaltungsmöglichkeiten zu entnehmen.

Hinsichtlich eines Verfahrens der eingangs genannten Art wird die Aufgabe der Erfindung dadurch gelöst, dass zur Bildung des Gemisches des Kerns Partikel verwendet werden, die zu mindestens 70%, vorzugsweise zu mindestens 80% ganz vorzugsweise zu mindestens 90% aus Einjahrespflanzen gewonnen sind, und dass zur Bildung des Gemisches der beiden Deckschichten Partikel verwendet werden, die zu mindestens 70%, vorzugsweise zu mindestens 80% ganz vorzugsweise zu mindestens 90% aus Holz gewonnen sind.

Mit einem derartigen Verfahren kann eine Werkstoffplatte erzeugt werden, die nicht nur aus ökologischen und ökonomischen Gesichtspunkten große Vorteile bietet, sondern zudem auch hohe Festigkeitswerte, insbesondere hohe Biegesteifigkeitswerte, erreichen kann. Da der den größten Gewichts- und Volumenanteil bildende Kern aus rasch nachwachsenden Rohstoffen gebildet ist, die weltweit "just in time" und zudem kostengünstig und ohne hohen Transportaufwand verfügbar sind ist ein solches Verfahren ökonomisch und ökologisch sehr vorteilhaft. Da unter Anwendung eines solchen Verfahrens Werkstoffplatte herstellbar sind, deren Festigkeitswerte, insbesondere deren Biegesteifigkeit, hohe Werte erreichen kann, ist das Verfahren zudem technologisch sehr vorteilhaft.

Die Erfinder haben nämlich erkannt, dass die Belastbarkeit einer Werkstoffplatte, insbesondere bezogen auf deren Biegesteifigkeit, in besonders hohem Maß von der Gestaltung der jeweils außen liegenden Schichten, insbesondere also der jeweiligen Deckschicht(en), abhängig ist.

Dazu bieten Werkstoffplatten, deren beiden äußeren Deckschichten aus einem Binder-Partikelgemisch gebildet werden, wobei die darin enthaltenen Partikel zu mindestens 70%, vorzugsweise zu mindestens 80% ganz vorzugsweise zu mindestens 90% aus Holz gewonnen sind hervorragende Voraussetzungen, auch wenn ihr Kern aus einem Binder-Partikelgemisch gebildet wird, wobei die darin enthaltenen Partikel zu mindestens 70%, vorzugsweise zu mindestens 80% ganz vorzugsweise zu mindestens 90% aus Einjahrespflanzen gewonnen sind.

Überraschender Weise hat sich in Versuchen sogar gezeigt, dass auch Werkstoffplatten, deren beiden äußeren Deckschichten aus einem Binder-Partikelgemisch gebildet werden, wobei die darin enthaltenen Partikel zu mindestens 30%, vorzugsweise zu mindestens 50% ganz vorzugsweise zu mindestens 60% aus Mehrjahrespflanzen gewonnen sind bereits sehr gute Voraussetzungen bilden, auch wenn ihr Kern aus einem Binder-Partikelgemisch gebildet wird, wobei die darin enthaltenen Partikel zu mindestens 70%, vorzugsweise zu mindestens 80% ganz vorzugsweise zu mindestens 90% aus Einjahrespflanzen gewonnen sind. Zwar können die auf diese Weise erzielbaren Steigerungen der Festigkeitswerte, insbesondere der Biegesteifigkeitswerte, gegenüber einer Werkstoffplatte die ausschließlich aus Partikel von Einjahrespflanzen hergestellt wird, noch keinen Hinweis auf die enormen Effekte geben, die diesbezüglich durch die zuvor genannten Partikelverhältnisse ab wenigsten 70% Mehrjahrespflanzenanteil erzielbar sind, jedoch können auch derartige Werkstoffplatten bereits vielen einfacheren Anwendungsfällen vollständig genügen.

Es ist dabei bevorzugt, dass die erste Deckschicht und die zweite Deckschicht einen Volumenanteil zwischen 15 % und 65 % des Volumens der Werkstoffplatte bilden. Ganz besonders bevorzugt ist dabei, dass die erste Deckschicht und die zweite Deckschicht einen Volumenanteil zwischen 25 % und 50 % und insbesondere einen Volumenanteil von 30 % bis 45 % des Volumens der Werkstoffplatte bilden und die Schichten zuvor entsprechend verteilt aufeinander aufgebracht werden.

Bei solchen Volumenanteilen können sich in üblichen Werkstoffplattenstärkebereichen zwischen etwa 8 mm und 25 mm einzelne Deckschichtstärken zwischen etwa 1,0 mm und 4,0 mm bis 4,5 mm ausgebildet werden.

Um einen möglichst hohen Volumenanteil durch die aus ökologischen und ökonomischen Gründen bevorzugt einzusetzenden, aus Einjahrespflanzen gewonnenen, Partikeln realisieren zu können, ist es in dem genannten Werkstoffplattenstärkebereich besonders zu bevorzugen, dass die Deckschichtstärken gemeinsam nicht mehr als 45 % des Volumens der Werkstoffplatte bilden und dabei insbesondere aber wenigstens 15%, vorzugsweise wenigstens 25 %, ganz vorzugsweise wenigstens 30 % des Volumens der Werkstoffplatte bilden und die Schichten zuvor entsprechend verteilt aufeinander aufgebracht werden.

Um den Effekt thermisch bedingter Grenzflächenspannungen entgegenzuwirken ist es deshalb auch bevorzugt, dass die dem Gemisch einer Schicht, insbesondere des Kerns, einer Deckschicht einer Zwischenschicht, zugehörigen Partikel zu mindestens zu 4%, vorzugsweise zu mindestens zu 8% ganz vorzugsweise zu mindestens zu 10% aus dem Pflanzentyp gewonnen sind, aus dem die den Großteil des Gemisches zugehörigen Partikel der ihr benachbarten Schicht gewonnen sind und die Schichten bildenden Partikel zuvor entsprechend vermischt aufeinander aufgebracht werden und/oder Vermischungsprozesse während des Pressvorgangs eingebunden werden. Vermischungsprozesse können beispielsweise durch gezieltes Aufheizen von einer oder von beiden Seiten der wenigstens noch nicht vollständig verpressten Schichten, durch Rütteln und/oder durch das Aufbringen gezielter Pressprofile hervorgerufen und in den Herstellungsprozess der Werkstoffplatte eingebunden werden.

Ein mögliches bevorzugtes Pressprofil innerhalb eines kontinuierlichen Herstellungsverfahrens kann dabei darin bestehen, dass der auf den Kern und die beiden Deckschichten wirkenden Druck im Einlaufbereich einer kontinuierlich arbeitenden Presse zwischen 35 bar und 50 bar beträgt und innerhalb dieser Grenzen um einen bevorzugt steigenden Mittelwert in gewissen Grenzen pulsiert, bevor der Druck im weiteren Verlauf des Pressvorgangs auf einen stetigen Wert eingestellt wird, der bevorzugt abfällt und dabei vor einem Kalibrierungsbereich der verwendeten Presse bis auf Werte um die 20 bar eingestellt werden kann. In einem Kalibrierbereich kann der Pressdruck dann noch einmal auf einen Wert von über 20 bar, beispielsweise auf bis zu 25 bar oder 30 bar ansteigen, bevor die Werkstoffplatte den Pressbereich der Werkstoffplattenerzeugungsanlage verläßt. Während des Verpressens können Temperaturen von bis zu 255°C auf die Deckschichten einwirken. Bevorzugt werden die Deckschichten jedoch nicht mit Temperaturen von über 240°C belastet, wobei die Temperaturbelastung bis zum Kalibrierbereich mit Vorteil sinkend eingestellt werden kann, sodass die entstehende Werkstoffplatte vor Verlassen des Pressbereichs lediglich noch mit Temperaturen von etwa 170°C bis etwa 190°C beaufschlagt wird.

Dabei ist es bevorzugt, dass zur Bildung des Festkörpergefüges der Werkstoffplatte, das den Kern bildende Gemisch dem unter Druck und Temperatureinfluss stehenden Anteil des chemischen Bindungsprozesses im Wesentlichen rieselfähig zugeführt wird und das wenigstens eine Deckschicht bildende Gemisch dem unter Druck und Temperatureinfluss stehenden Anteil des chemischen Bindungsprozesses im Wesentlichen fließfähig zugeführt wird.

Es ist also vorgesehen, dass zur Bildung des Kerns ein Gemisch aus mit Bindemitteln benetzten, rieselfähigen Partikeln geschüttet oder gestreut wird, während zur Bildung wenigstens einer Deckschicht ein Gemisch aus, aus Mehrjahrespflanzen gewonnenen und in einer Bindemittelenthaltenen Lösung enthaltenen ("schwimmenden") Partikeln in fließfähiger Form auf eine Grenzschicht des Kerns aufgebracht wird.

Diese Deckschicht wird also nicht in klassischer Weise durch einen Streuprozess hergestellt, sondern aus einem fließfähigen, breiartigen Partikel-Flüssigkeitsgemisch bzw. aus einem flüssigen Brei, der eine Feststoff-Flüssigkeits-Suspension darstellt. Damit lassen sich auf einfache Weise sehr dünne Deckschichten erzeugen. Bei der anschließenden Kompression der mehrschichtigen Matte aus gestreuter Kernschicht und breiartigen Span-Deckschichten wird die breiartige Deckschicht in die vorhandenen Kavitäten bzw. Zwischenräume zwischen den Partikeln der Kernschicht gepresst, sodass sie diese Zwischenräume ausfüllt und die Oberflächen einebnet. Dadurch dass das Material für die Deckschichten fließfähig ist, erfolgt eine gleichmäßige Verteilung sowohl in der Höhe bzw. Dicke der Schicht als auch in der Fläche. Das fließfähige Material füllt damit ursprünglich offene Stellen der Kernlage wenigstens oberflächig aus und bildet dann eine glatte und geschlossene Oberfläche. Besonders vorteilhaft lässt sich dieses bei Kernschichten bzw. Mittellagen aus besonders groben Partikeln, insbesondere aus Strands oder (gespleißten) Halmen ausnutzen, die bei OSB-Platten üblicherweise eine besonders raue, offenporige Oberfläche erzeugen. Alternativ lässt sich das erfindungsgemäße Verfahren aber auch bei Kernschichten aus Spänen einsetzen.

Dadurch entsteht eine Werkstoffplatte, insbesondere Holzwerkstoffplatte, die sich durch eine glatte und geschlossene Oberfläche auszeichnet und damit direkt und einfach vergüten lässt, z. B. durch das Aufbringen einer Beschichtung (Papiere oder dünne Furniere) oder durch eine Lackierung bzw. einen Anstrich. Besonders vorteilhaft ist die Tatsache, dass die Biegesteifigkeit der Werkstoffplatte, auch in ihren inneren Übergangsbereichen, nur unwesentlich beeinträchtigt wird, da die Deckschichten und die Kernschicht durch den Breiauftrag unter Ausbildung einer Zwischenschicht sehr homogene Übergänge ausbilden.

Die Deckschichten lassen sich zudem - falls dies gewünscht ist - derart dünn in Breiform auftragen, dass die mechanische Festigkeit des Kerns weiterhin dominiert, der dann beispielsweise als OSB-Schichttyp ausgebildet sein kann. Durch den Einsatz des fließfähigen Materials für die Deckschichten gelingt das Einebnen der Platte bzw. das Schließen von Löchern und Poren (der Kernschicht) mit sehr geringen Partikel- insbesondere z.B. Spanmengen für die Deckschichten, denn das breiartige Partikel-Flüssigkeitsgemisch enthält lediglich zu einem verhältnismäßig geringen Anteil Feststoffpartikel, z.B. Späne, sodass insgesamt geringe Partikelmengen erforderlich sind. Damit besteht die Möglichkeit, die Deckschichten so dünn herzustellen, dass sie als nicht vollflächige Deckschichten derart ausgebildet sind, dass (einzelne) Partikel, z.B. Strands oder gespleißte Halme, der Kernschicht teilweise durch die Deckschicht hindurch unter Bildung von Unterbrechungen der Deckschicht bis an die Plattenoberfläche reichen, sodass die Partikel der Mittelschicht teilweise sichtbar bleiben bzw. sichtbar werden.

Im Zuge der Herstellung wird bevorzugt (zunächst) die untere Deck-Pressgutschicht als fließfähiges Span-Flüssigkeitsgemisch auf ein (endlos umlaufendes) Formband aufgebracht. Auf die untere Deck-Pressgutschicht wird (danach) die Kern-Pressgutschicht in herkömmlicher Weise aufgestreut, z. B. mit einer oder mehreren geeigneten Streuvorrichtungen. Auf diese gestreute Kern-Pressgutschicht wird (anschließend) die obere Deck-Pressgutschicht wiederum als fließfähiges Span-Flüssigkeitsgemisch aufgebracht. Optional können nicht eine einzige, sondern mehrere Kern-Pressgutschichten aufgestreut werden, das heißt bevorzugt mehrere Lagen von Strands, Halmen oder Spänen mit bevorzugt unterschiedlicher Orientierung.

Von besonderer Bedeutung ist die Herstellung der Deck-Pressgutschichten aus dem fließfähigen Partikel-Flüssigkeitsgemisch nach Art einer Suspension, die einerseits feste Partikel, z.B. Späne, und andererseits eine Flüssigkeit, z. B. Wasser, sowie außerdem bevorzugt ein Bindemittel (z. B. Leim wie Harnstoffharze, insbesondere Isozyanat (pMDI)) enthält. Wichtig ist, dass es sich dabei um ein fließfähiges Gemisch handelt, das heißt die Mischung aus Partikeln und der Flüssigkeit (insbesondere Wasser, aber auch Leim- und Wachsemulsion sowie andere flüssige Zuschlagstoffe) so eingestellt wird, dass die resultierende Viskosität der Mischung weiterhin fließfähig ist. Dabei beträgt der Anteil der Flüssigkeit in dem Gemisch mehr als 100 % des Anteils der (trockenen) Späne, und zwar bezogen auf das Gewicht, besonders bevorzugt mehr als 200 %. Das bedeutet, dass innerhalb der Mischung der Flüssigkeitsanteil zumindest so groß ist, wie der Spananteil, vorzugsweise zumindest das 2-fache (das heißt 200 %), besonders bevorzugt zumindest das 3-fache (das heißt 300 %) beträgt, und zwar jeweils bezogen auf das Gewicht.

Das fließfähige Span-Flüssigkeitsgemisch lässt sich unter Bildung der Deck-Pressgutschichten z. B. durch Extrusion mit einem Extruder auftragen. Alternativ lässt sich das Gemisch durch Sprühdüsen, Drehteller oder andere geeignete Vorrichtungen applizieren.

Von großem Vorteil ist es, wenn sich während des chemischen Bindungsprozesses Partikel aus dem Kern und der wenigstens einen Deckschicht so vermischen, dass eine Zwischenschicht entsteht, deren Gemisch Partikel aus Einjahrespflanzen und Partikel aus Mehrjahrespflanzen aufweist, deren Anteil am Gemisch nach Abschluss des chemischen Bindungsprozesses bei zu mindestens jeweils 5%, vorzugsweise zu mindestens 10%, ganz vorzugsweise zu mindestens 15% liegt.

Dadurch ist es besonders gut möglich, Werkstoffplatten bereit stellen zu können, die bei möglichst geringem Gewicht möglichst hohe Festigkeitswerte bieten, um einerseits beispielsweise bei der Verarbeitung, gut handhabbar zu sein und andererseits die notwendigen mechanischen Anforderungen, beispielsweise für einen zweckgemäßen Einsatz, zu erfüllen.

Im Zusammenhang mit der Erkenntnis der Erfindung, dass die Belastbarkeit einer Werkstoffplatte, insbesondere bezogen auf deren Biegesteifigkeit, in besonders hohem Maß von der Gestaltung der jeweils außen liegenden Schichten, insbesondere also der jeweiligen Deckschicht(en), abhängig ist, kann es deshalb bevorzugt sein, den Kern durch ein voluminöses Gelege geringer Dichte zu bilden, was insbesondere in einem dem eigentlichen Pressprozess vorgelagerten, so genannten, Streuprozess besonders gut beeinflusst werden kann. Derartige Gelege weisen auf Grund ihrer großen Porigkeit an ihren Grenzschichten dann jedoch große Kerbwirkungen auf. Unabhängig davon, wie stark die Porigkeit des den Kern bildenden Geleges tatsächlich ausgebildet wird, kommt es nach Erkenntnis der Erfinder beispielsweise bei thermisch bedingter Ausdehnung in den Grenzbereichen zwischen Schichten die aus Einjahrespflanzenfasern gebildet sind (z.B. einem Kern) und Schichten die aus Mehrjahrespflanzenfasern gebildet sind zu erhöhten Spannungen. Diese Spannungen treten während des Herstellungsprozesses , aber auch bei der fertigen Werkstoffplatte auf, wirken dann als Vorspannung und begünstigen durch den relativ großem Abstand zur neutralen Schicht in erheblichem Maß Minderungen der Belastbarkeit der Werkstoffplatte. Auch die die angesprochene Kerbwirkung greift an einer empfindlichen Stelle der Werkstoffplatte an und wirkt ebenfalls in erheblichem Maß mindernd auf die Belastbarkeit der Werkstoffplatte. Beide negativen Effekte lassen sich durch das Vorsehen einer entsprechend gestalteten Zwischenschicht deutlich reduzieren, sodass bessere Eigenschaften insbesondere höhere Belastbarkeiten der Werkstoffplatte erzielbar sind.

Um den Effekt thermisch bedingter Grenzflächenspannungen entgegenzuwirken ist es deshalb auch bevorzugt, dass die dem Gemisch einer Schicht, insbesondere des Kerns, einer Deckschicht einer Zwischenschicht, zugehörigen Partikel zu mindestens zu 4%, vorzugsweise zu mindestens zu 8% ganz vorzugsweise zu mindestens zu 10% aus dem Pflanzentyp gewonnen sind, aus dem die den Großteil des Gemisches zugehörigen Partikel der ihr benachbarten Schicht gewonnen sind.

Die gewünschten Vermischungsprozesse können beispielsweise durch gezieltes Aufheizen von einer oder von beiden Seiten der wenigstens noch nicht vollständig verpressten Schichten, durch Rütteln und/oder durch das Aufbringen gezielter Pressprofile hervorgerufen und in den Herstellungsprozess der Werkstoffplatte eingebunden werden. Zudem kann die dem Pressvorgang vorgeschaltete Streuung entsprechend gesteuert werden. Beispielsweise kann die Bildung besonders poriger Grenzschichten des Kerns programmiert werden und/oder bei der Erzeugung der Deckschichten zunächst besonders riesel- oder fließfähiges Gemisch auf die porige Grenzschicht des Kerns aufgebracht werden.

Auch kann es bevorzugt sein, dass wenigstens der Kern dem unter Druck und Temperatureinfluss stehenden Anteil des chemischen Bindungsprozesses vorverdichtet zugeführt wird.

Auf diese Weise können sowohl das Gefüge und insbesondere die Dichte des Kerns, wie auch die Beschaffenheit seiner Grenzschichten beeinflusst werden. Dabei können die Grenzschichten beispielsweise durch die Behandlung mit Pressflächen unterschiedlicher Oberflächenstruktur unterschiedlich ausgebildet werden. Auch läßt sich durch Steuerung von Druck und Temperatur in gewissen Grenzen beeinflussen, wie stark sich die Grenzschicht bei entsprechender Verdichtung des Kerns schließt. Je nach Art des den Kern bildenden Schichttyps können Vorverdichtungen von 1,3 zu 1 bis 6,5 zu 1 sinnvoll sein. Dies kann auch davon abhängig sein, wie lange sich der vorkomprimierte Kern anschließend wieder entspannen können soll.

Weiter ist es von großem Vorteil, wenn das Verfahren zur Herstellung einer nach einem der Ansprüche 2 bis 11 ausgebildeten Werkstoffplatten weitergebildet ist.

Die sich daraus ergebenden Vorteile sind sinngemäß der Vorteilsbeschreibung der erfindungsgemäßen Werkstoffplatte und ihren bevorzugten Ausgestaltungsmöglichkeiten zu entnehmen.

Bezogen auf eine Anlage der eingangs genannten Art wird wenigstens eine Aufgabe, nicht gemäß der Beanspruchten Erfindung, dadurch gelöst, dass die Formstation eine erste Auftragsvorrichtung zum Aufbringen wenigstens einer rieselfähigen, kernbildenden Pressgutmatten-Schicht und wenigstens eine zweite Auftragsvorrichtung zum Aufbringen wenigstens einer fließfähigen, deckschichtbildenden Pressgutmatten-Schicht aufweist.

Eine derartige Anlage ist hervorragend geeignet, eine Werkstoffplatte bereit zu stellen, die aus ökologischen und ökonomischen Gründen einen hohen Anteil Einjahrespflanzen basierter Partikel aufweist und dennoch gute mechanische Eigenschaften aufweist. Eine weitere Aufgabe, nicht gemäß de beanspruchten Erfindung, kann darin gesehen werden, die Anlagenbelastung im Herstellungsprozess verhältnismäßig gering zu gestalten. Eine weitere Aufgabe kann darin gesehen werden, den Abschliffanteil gering zu halten.

Insbesondere bietet eine derartige Anlage hervorragende Bedingungen um ein Verfahren gemäß einem der Ansprüche 13 bis 17 durchzuführen und/oder eine Werkstoffplatte nach einem der Ansprüche 1 bis 12 herzustellen.

Dazu kann es besonders bevorzugt sein, dass die wenigstens eine zweite Auftragsvorrichtung als Extrusionsvorrichtung ausgebildet ist oder eine Extrusionsvorrichtung umfasst, da Extrusionsvorrichtungen geeignet sind fließfähige Partikel-Flüssigkeitsgemische prozessicher beispielsweise auf einen Abschnitt eines umlaufenden Formbandes aufzutragen und ihre Ausbringung rasch anpassbar und zudem gut dosierbar ist.

Die Erfindung wird im Folgenden anhand einer, lediglich ein Ausführungsbeispiel darstellenden Zeichnung näher erläutert. Darin zeigen:
- Figur 1:: eine erfindungsgemäße Holzwerkstoffplatte in einem einfachen Vertikalschnitt,
- Figur 2:: eine Anlage zur Herstellung einer Werkstoffplatte

Anhand der Figuren soll beispielhaft das erfindungsgemäße Verfahren zum Herstellen einer Werkstoffplatte, sowie die (Holz-)Werkstoffplatte selbst und eine zu ihrer Herstellung geeignete Anlage erläutert werden.

Eine solche (Holz-)Werkstoffplatte 1 weist einen Kern bzw. eine Kernschicht 2 sowie eine (z.B. obere) erste Deckschicht 3 und eine (z.B. untere) zweite Deckschicht 4 auf, wobei die den Gemische 8 der beiden Deckschichten 3, 4 zugehörigen Partikel 6 zu mindestens 70%, vorzugsweise zu mindestens 80% ganz vorzugsweise zu mindestens 90% aus Holz gewonnen sind, während die dem Gemisch 7 des Kerns (2) zugehörigen Partikel 5 zu mindestens 70%, vorzugsweise zu mindestens 80% ganz vorzugsweise zu mindestens 90% aus Einjahrespflanzen gewonnen sind.

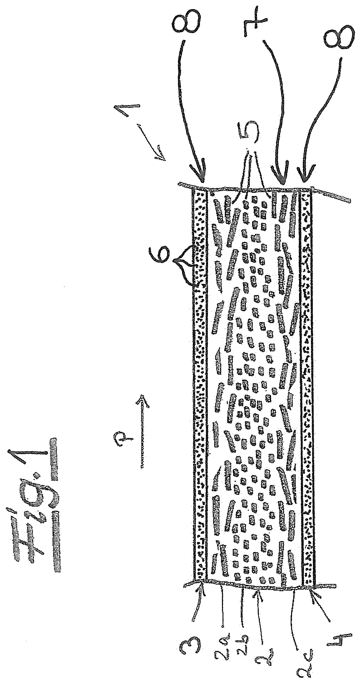

In dem dargestellten Ausführungsbeispiel ist die Kernschicht 2 selbst wiederum mehrlagig ausgebildet. Sie weist eine obere Lage 2a, eine mittlere Lage 2b und eine untere Lage 2c auf, die hier jeweils aus Strands bestehen, jedoch mit unterschiedlichen Orientierungen. Während die Strands der oberen Lage 2a und der unteren Lage 2c entlang der Produktionsrichtung X bzw. Plattenlängsrichtung P orientiert sind, sind die Strands der mittleren Lage 2b im Wesentlichen quer zur Produktionsrichtung X bzw. Plattenlängsrichtung P, also in Y-Richtung orientiert. Dies ist in Fig. 1 lediglich vereinfacht angedeutet. Der Kern kann jedoch auch einlagig und/oder in Form eines anderen Schichttyps, beispielsweise als Span-Schichttyp oder als MDF- / HDF-Schichttyp ausgebildet sein.

Zur Herstellung einer solchen Holzwerkstoffplatte 1 wird zunächst eine mehrschichtige Pressgutmatte 1' erzeugt, die mittels Druck und Wärme zu der Holzwerkstoffplatte 1 verpresst wird.

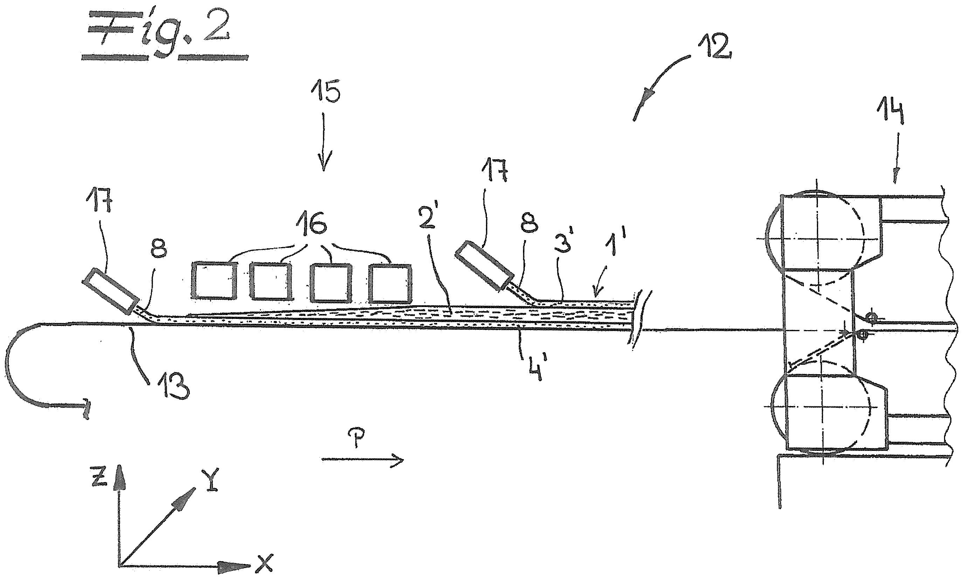

Ein solches Herstellungsverfahren wird anhand von Fig. 2 näher erläutert. Es wird zunächst die mehrschichtige Pressgutmatte 1' auf einem Formband 13 erzeugt, wobei diese Pressgutmatte 1' eine (mittlere) Kern-Pressgutschicht 2', eine obere Deck-Pressgutschicht 3' und eine untere Deck-Pressgutschicht 4' enthält. Diese auf dem Formband 13 erzeugte, mehrschichtige Pressgutmatte 1' wird in eine Presse 14 eingeführt und in der Presse 14 unter Anwendung von Druck und Wärme zu der Werkstoffplatte 1 verpresst. In dem dargestellten Ausführungsbeispiel ist eine kontinuierlich arbeitende Presse 14 nach Art einer Doppelbandpresse dargestellt.

Im Stand der Technik werden Pressgutmatten allgemein in klassischer Weise aus streufähigen, rieselfähigen Partikeln in einer Formstation hergestellt, die eine Mehrzahl von klassischen Streuköpfen enthält, sodass nacheinander die einzelnen Schichten auf das Formband 13 aufgestreut werden.

Demgegenüber zeigt Fig. 2 eine Anlage, mit der in erfindungsgemäßer Weise wenigstens eine Deck-Pressgutschichten 3', 4' nicht aus streufähigen Partikeln, sondern aus einem fließfähigen Partikel-Flüssigkeitsgemisch 8 erzeugt wird. Die Kern-Pressgutschicht 2` wird in herkömmlicher Weise aus einem Gemisch streufähiger Partikel aufgestreut.

Dazu weist die Anlage 12 eine Formstation 15 auf, die die ersten Auftragsvorrichtungen 16 und die zweiten Auftragsvorrichtungen 17 aufweist. Während die Auftragsvorrichtungen 16 für die Kern-Pressgutschicht 2` als klassische Streuköpfe ausgebildet sein können, sind die Auftragsvorrichtungen 17 für die Deck-Pressgutschichten 3', 4' für den Auftrag aus einem fließfähigen Span-Flüssigkeitsgemisch 8 eingerichtet. Sie können z. B. als Extrusionsvorrichtungen zur Erzeugung und zum Aufbringen des Partikel-Flüssigkeitsgemisches 8 ausgebildet sein.

Auf diese Weise wird auf das Formband 13 zunächst die untere Deck-Pressgutschicht 3' in fließfähiger Form aufextrudiert. Auf diese untere Deck-Pressgutschicht 3' wird die Kern-Pressgutschicht 2` mit den als Streuköpfe ausgebildeten ersten Auftragsvorrichtungen 16 in klassischer Weise aufgestreut. Dabei sind in dem Ausführungsbeispiel nach Fig. 2 insgesamt vier Streuköpfe angedeutet, und zwar für die Erzeugung einer mehrlagigen, entsprechend orientierten Kern-Pressgutschicht 2`. So können mit dem ersten Streukopf die längsorientierten Strands für eine untere Lage der Kern-Pressgutschicht 2' und mit der zweiten und dritten Auftragsvorrichtung 16 die querorientierten Strands für die zentrale Lage der Kern-Pressgutschicht 2` und schließlich mit der vierten Auftragsvorrichtung 16 die längsorientierten Strands für die obere Lage der Kern-Pressgutschicht 2` aufgestreut werden. An die letzte Auftragsvorrichtung 16 schließt sich die Auftragsvorrichtung 17 für die Deck-Pressgutschicht 4' an, sodass auf die Kern-Pressgutschicht 2` die Deck-Pressgutschicht 4' in fließfähiger Form aufextrudiert wird. Die auf diese Weise hergestellte Pressgutmatte 1' wird anschließend in die Presse 14 eingeführt und zu der Werkstoffplatte 1 verpresst. Selbstverständlich können zwischen der Formstation 15 und der Presse 14 weitere Anlagenkomponenten angeordnet sein, z. B. Vorrichtungen zur Bearbeitung der Matte, eine Vorpresse und/oder Vorwärmeinrichtung, Detektionsvorrichtungen für eine Fremdkörper-Detektion und/oder eine Fehlschüttung. Einzelheiten sind nicht dargestellt.

Unabhängig von der in Fig. 2 dargestellten Anlage können erfindungsgemäße Werkstoffplatten die einen Kern 2 sowie eine erste Deckschicht 3 und eine zweite Deckschicht 4 aufweisen, die jeweils aus Lignin haltigen Partikeln 5, 6 und einem Bindemittel gebildete Gemisch 7, 8 gebildet sind, dass in einem chemischen Bindungsprozess zu einem Festkörpergefüge ausgebildet ist, wobei die dem Gemisch 7 des Kerns 2 zugehörigen Partikel 5 zu mindestens 70%, vorzugsweise zu mindestens 80% ganz vorzugsweise zu mindestens 90% aus Einjahrespflanzen gewonnen sind, und dass die den Gemische 8 der beiden Deckschichten 3, 4 zugehörigen Partikel 6 zu mindestens 70%, vorzugsweise zu mindestens 80% ganz vorzugsweise zu mindestens 90% aus Holz gewonnen sind jedoch auch auf herkömmlichen Anlagen erzeugt werden, wobei sowohl der Kern, wie auch die Deckschichten im Streuverfahren übereinander aufgebaut werden.

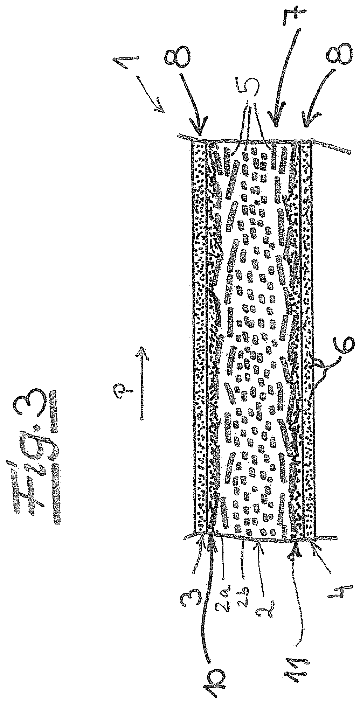

Die in Fig 2. dargestellte Anlage bietet jedoch besonders gute Voraussetzungen zur Durchführung eines beschriebenen Verfahrens und in Folge dessen auch besonders gute Voraussetzungen für die Ausbildung von Zwischenschichten 10, 11, wie sie in der in Fig. 3 gezeigten Werkstoffplatte dargestellt sind. Die Werkstoffplatte 1 aus Fig. 3 entspricht ansonsten in ihrem Aufbau der in Fig. 1 dargestellten Werkstoffplatte.

### Bezugszeichenliste

- 1: Werkstoffplatte
- 1': Pressgutmatte
- 2: Kern, (Schicht)
- 2': Kernpressgutschicht
- 2a: obere Lage
- 2b: mittlere Lage
- 2c: untere Lage
- 3: (erste) Deckschicht, (Schicht)
- 3': (erste) Deckschichtmatte
- 4: (zweite) Deckschicht, (Schicht)
- 4': (zweite) Deckschichtmatte
- 5: Partikel
- 6: Partikel
- 7: Gemisch (Kern bildendes Gemisch)
- 8: Gemisch (Deckschicht bildendes Gemisch)
- 9: Gemisch (Zwischenschicht bildendes Gemisch)
- 10: (erste) Zwischenschicht
- 11: (zweite) Zwischenschicht
- 12: Anlage
- 13: Formband
- 14: Presse
- 15: Formstation
- 16: erste Auftragsvorrichtung
- 17: zweite Auftragsvorrichtung
- P: Plattenlängsrichtung
- X: Raumrichtung, Längsrichtung
- Y: Raumrichtung, Querrichtung
- Z: Raumrichtung, Höhenrichtung

## Patentansprüche

1. Werkstoffplatte (1), die einen Kern (2) sowie eine erste Deckschicht (3) und eine zweite Deckschicht (4) aufweist, die jeweils aus Lignin haltigen Partikeln (5, 6) und einem Bindemittel gebildete Gemisch (7, 8) gebildet sind, dass in einem chemischen und/oder mechanischen Bindungsprozess zu einem Festkörpergefüge ausgebildet ist, wobei die dem Gemisch (7) des Kerns (2) zugehörigen Partikel (5) zu mindestens 70%, vorzugsweise zu mindestens 80%, ganz vorzugsweise zu mindestens 90% aus Einjahrespflanzen gewonnen sind, und dass die den Gemischen (8) der beiden Deckschichten (3, 4) zugehörigen Partikel (6) zu mindestens 70%, vorzugsweise zu mindestens 80% ganz vorzugsweise zu mindestens 90% aus Holz gewonnen sind.

2. Werkstoffplatte (1) nach Anspruch 1, **dadurch gekennzeichnet, dass** zwischen dem Kern (2) und wenigstens einer Deckschicht (3, 4) eine, ein aus Lignin haltigen Partikeln (5, 6) und einem Bindemittel gebildeten Gemisch (9) aufweisende, Zwischenschicht (10, 11) angeordnet ist, und die dem Gemisch (9) der Zwischenschicht (10, 11) zugehörigen Partikel (5, 6) jeweils zu mindestens 5%, vorzugsweise zu mindestens 10%, ganz vorzugsweise zu mindestens 15% aus Einjahrespflanzen und aus Holz gewonnen sind.

3. Werkstoffplatte (1) nach Anspruch 1 oder 2, **dadurch gekennzeichnet, dass** das Gemisch (7) des Kerns (2) und die Gemische (8) der Deckschichten (3, 4) Bindemittel aus derselben Bindemittelgruppe, vorzugsweise dasselbe Bindemittel umfassen.

4. Werkstoffplatte (1) nach einem der vorhergehenden Ansprüche, **dadurch gekennzeichnet, dass** der Kern (2) als OSB-Schichttyp ausgebildet ist.

5. Werkstoffplatte (1) nach einem der Ansprüche 1 bis 3, **dadurch gekennzeichnet, dass** der Kern (2) als MDF- oder HDF-Schichttyp ausgebildet ist.

6. Werkstoffplatte (1) nach einem der Ansprüche 1 bis 3, **dadurch gekennzeichnet, dass** der Kern(2) als Span-Schichttyp ausgebildet ist.

7. Werkstoffplatte (1) nach einem der vorhergehenden Ansprüche, **dadurch gekennzeichnet, dass** wenigstens eine Deckschicht (3, 4) als OSB-Schichttyp ausgebildet ist.

8. Werkstoffplatte (1) nach einem der vorhergehenden Ansprüche, **dadurch gekennzeichnet, dass** wenigstens eine Deckschicht (3, 4) als MDF- oder HDF-Schichttyp ausgebildet ist.

9. Werkstoffplatte (1) nach einem der vorhergehenden Ansprüche, **dadurch gekennzeichnet, dass** wenigstens eine Deckschicht (3, 4) als Span-Schichttyp ausgebildet ist.

10. Werkstoffplatte (1) nach einem der vorhergehenden Ansprüche, **dadurch gekennzeichnet, dass** der Kern (2) und die ihn umgebenden Deckschichten (3, 4) und ggf. Zwischenschichten (10, 11) jeweils aus einem einheitlichen Schichttyp gebildet sind.

11. Werkstoffplatte (1) nach einem der Ansprüche 1 bis 9, **dadurch gekennzeichnet, dass** die Werkstoffplatte (1) wenigstens zwei unterschiedliche Schichttypen umfasst.

12. Verwendung einer Werkstoffplatte (1) für den Wohnungsinnenausbau, **dadurch gekennzeichnet, dass** eine, gemäß einem der Ansprüche 1 bis 11 ausgebildete, Werkstoffplatte (1) verwendet wird.

13. Verfahren zur Herstellung einer Werkstoffplatte (1), die einen Kern (2) sowie eine erste Deckschicht (3) und eine zweite Deckschicht (4) aufweist, die jeweils aus Lignin haltigen Partikeln (5, 6) und einem Bindemittel gebildeten Gemisch (7, 8) gebildet sind, dass in einem chemischen und/oder mechanischen Bindungsprozess unter Einwirkung von Druck und Temperatur zu einem Festkörpergefüge ausgebildet wird, wobei zur Bildung des Gemisches (7) des Kerns (2) Partikel (5) verwendet werden, die zu mindestens 70%, vorzugsweise zu mindestens 80% ganz vorzugsweise zu mindestens 90% aus Einjahrespflanzen gewonnen sind, und dass zur Bildung des Gemisches (8) der beiden Deckschichten (3, 4) Partikel (6) verwendet werden, die zu mindestens 70%, vorzugsweise zu mindestens 80% ganz vorzugsweise zu mindestens 90% aus Holz gewonnen sind.

14. Verfahren nach dem vorhergehenden Anspruch, **dadurch gekennzeichnet, dass** zur Bildung des Festkörpergefüges der Werkstoffplatte (1), das den Kern (2) bildende Gemisch (7) dem unter Druck und Temperatureinfluss stehenden Anteil des chemischen Bindungsprozesses im Wesentlichen rieselfähig gestreut wird und das wenigstens eine Deckschicht (3, 4) bildende Gemisch (8) dem unter Druck und Temperatureinfluss stehenden Anteil des chemischen Bindungsprozesses im Wesentlichen fließfähig als breiartiges Partikel-Flüssigkeitsgemisch zugeführt wird.

15. Verfahren nach einem der beiden vorhergehenden Ansprüche, **dadurch gekennzeichnet, dass** sich während des chemischen Bindungsprozesses Partikel (5, 6) aus dem Kern (2) und der wenigstens einen Deckschicht (3, 4) so vermischen, dass eine Zwischenschicht (10, 11) entsteht, deren Gemisch (9) Partikel aus Einjahrespflanzen und Partikel aus Holz aufweist, deren Anteil am Gemisch nach Abschluss des chemischen Bindungsprozesses bei zu mindestens jeweils 5%, vorzugsweise zu mindestens 10%, ganz vorzugsweise zu mindestens 15% liegt.

16. Verfahren nach einem der Ansprüche 13 bis 15, **dadurch gekennzeichnet, dass** wenigstens der Kern (2) dem unter Druck und Temperatureinfluss stehenden Anteil des chemischen Bindungsprozesses vorverdichtet zugeführt wird.

17. Verfahren nach einem der Ansprüche 13 bis 16, **dadurch gekennzeichnet, dass** das Verfahren zur Herstellung einer nach einem der Ansprüche 2 bis 14 ausgebildeten Werkstoffplatten (1) weitergebildet ist.

## Claims

1. A composite material board (1) that comprises a core (2) as well as a first cover layer (3) and a second cover layer (4) that are respectively made of a mixture (7, 8) of particles (5, 6) containing lignin and a bonding agent, that in a chemical or mechanical bonding process is formed into a solid structure, wherein at least 70%, preferably at least 80%, very preferably at least 90% of the particles (5) belonging to the mixture (7) of the core (2) are obtained from annual plants and at least 70%, preferably at least 80%, very preferably at least 90% of the particles (6) belonging to the mixture (8) of the two cover layers (3, 4) are obtained from wood.

2. The composite material board (1) according to claim 1, **characterised in that** arranged between the core (2) and at least one cover layer (3, 4) is an intermediate layer (10, 11) comprising a mixture (9) formed of particles (5, 6) containing lignin and a bonding agent and respectively at least 5%, preferably at least 10%, very preferably at least 15% of the particles (5, 6) belonging to the mixture (9) of the intermediate layer (10, 11) are obtained from annual plants and wood.

3. The composite material board (1) according to claim 1 or 2, **characterised in that** the mixture (7) of the core (2) and the mixtures (8) of the cover layers (3, 4) comprise bonding agents from the same bonding agent group, preferably the same bonding agent.

4. The composite material board (1) according any one of the preceding claims, **characterised in that** the core (2) is designed as OBS layer type.

5. The composite material board (1) according to any one of claims 1 to 3, **characterised in that** the core (2) is designed as MDF or HDF layer type.

6. The composite material board (1) according to any one of claims 1 to 3, **characterised in that** the core (2) is designed as chip layer type.

7. The composite material board (1) according to any one of the preceding claims, **characterised in that** the at least one cover layer (3, 4) is designed as OSB layer type.

8. The composite material board (1) according to any one of the preceding claims, **characterised in that** the at least one cover layer (3, 4) is designed as MDF or HDF layer type.

9. The composite material board (1) according to any one of the preceding claims, **characterised in that** the at least one cover layer (3, 4) is designed as chip layer type.

10. The composite material board (1) according to any one of the preceding claims, **characterised in that** the core (2) and the cover layers (2, 4) and any intermediate layers (10, 11) surrounding it are each made of a uniform layer type.

11. The composite material board (1) according to any one of claims 1 to 9, **characterised in that** the composite material board (1) comprises at least two different layer types.

12. Use of a composite material board (1) for interior design, **characterised in that** a composite material board designed in accordance with any one of claims 1 to 11 is used.

13. A method of producing a composite material board (1) that comprises a core (2) as well as a first cover layer (3 and a second cover layer (4) that are respectively made of a mixture (7, 8) of particles (5, 6) containing lignin and a bonding agent, that in a chemical or mechanical bonding process is formed into a solid structure, wherein at least 70%, preferably at least 80%, very preferably at least 90% of the particles (5) belonging to the mixture (7) of the core (2) are obtained from annual plants and to form the mixture (8) of the two cover layers (3, 4) particles (6) are used, of which at least 70%, preferably at least 80%, very preferably at least 90% are obtained from wood.

14. The method according to the preceding claim, **characterised in that** to form the solid structure of the composite material board (1), the mixture (7) forming the core (2) is scattered into the part of the chemical bonding process that is under the influence of pressure and temperature in an essentially pourable manner, and the mixture (8) forming the at least one cover layer (3, 4) is supplied to the part of the chemical bonding process under the influence of pressure and temperature in an essentially flowable manner as a pulp-like particle-fluid mixture.

15. The method according to any one of the preceding claims, **characterised in that** during the chemical bonding process, particles (5, 6) from the core (2) and the at least one cover layer (3, 4) mix in such a way that an intermediate layer (10, 11) is produced, the mixture (9) of which comprises particles from annual plants and particles from wood, the proportion of which in the mixture after completion of the chemical bonding process is respectively at least 5%, preferably at least 10%, very preferably at least 15%.

16. The method according to any one of claims 13 to 15, **characterised in that** at least the core (2) is suppled pre-compacted to the part of the chemical bonding process under the influence of pressure and temperature.

17. The method according to any one of claims 13 to 16, **characterised in that** the method is further developed to produced a composite material board (1) designed according to any one of claims 2 to 14.

## Revendications

1. Panneau à base de matériaux (1), qui comporte un noyau (2) ainsi qu'une première couche de couverture (3) et une deuxième couche de couverture (4), qui sont respectivement formées de particules (5, 6) contenant de la lignine et d'un mélange (7, 8) formant un liant, de sorte que dans un processus de liaison chimique et/ou mécanique une structure de corps solides est constituée, sachant que les particules (5) appartenant au mélange (7) du noyau (2) sont obtenues pour au moins 70 %, de préférence pour au moins 80 %, de façon tout à fait préférée pour au moins 90 % à partir de plantes annuelles et de sorte que les particules (6) appartenant au mélange (8) des deux couches de couverture (3, 4) sont obtenues pour au moins 70 %, de préférence pour au moins 80 %, de façon tout à fait préférée pour au moins 90 % à partir de bois.

2. Panneau à base de matériaux (1) selon la revendication 1, **caractérisé en ce qu'**entre le noyau (2) et au moins une couche de couverture (3, 4) est disposée une couche intermédiaire (10, 11) comportant un mélange (9) formé de particules (5, 6) contenant de la lignine et d'un liant et les particules (5, 6) appartenant au mélange (9) de la couche intermédiaire (10, 11) sont respectivement obtenues pour 5 %, de préférence pour au moins 10 %, de façon tout à fait préférée pour au moins 15 % à partir de plantes annuelles et à partir du bois.

3. Panneau à base de matériaux (1) selon la revendication 1 ou 2, **caractérisé en ce que** le mélange (7) du noyau (2) et les mélanges (8) des couches de couverture (3, 4) comprennent des liants faisant partie du même groupe de liants, de préférence le même liant.

4. Panneau à base de matériaux (1) selon l'une quelconque des revendications précédentes, **caractérisé en ce que** le noyau (2) est constitué sous la forme d'un type de couche à lamelle orientées (OSB).

5. Panneau à base de matériaux (1) selon l'une quelconque des revendications 1 à 3, **caractérisé en ce que** le noyau (2) est constitué sous la forme d'un type de couche à fibres de bois à densité moyenne (MDF) ou à fibres de bois à haute densité (HDF).

6. Panneau à base de matériaux (1) selon l'une quelconque des revendications 1 à 3, **caractérisé en ce que** le noyau (2) est constitué sous la forme d'un type de couche à base de copeaux.

7. Panneau à base de matériaux (1) selon l'une quelconque des revendications précédentes, **caractérisé en ce qu'**au moins une couche de couverture (3, 4) est constituée sous la forme d'un type de couche à lamelle orientées (OSB) .

8. Panneau à base de matériaux (1) selon l'une quelconque des revendications précédentes, **caractérisé en ce qu'**au moins une couche de couverture (3, 4) est constituée sous la forme d'un type de couche à fibres de bois à densité moyenne (MDF) ou à fibres de bois à haute densité (HDF).

9. Panneau à base de matériaux (1) selon l'une quelconque des revendications précédentes, **caractérisé en ce qu'**au moins une couche de couverture (3, 4) est constituée sous la forme d'un type de couche à base de copeaux.

10. Panneau à base de matériaux (1) selon l'une quelconque des revendications précédentes, **caractérisé en ce que** le noyau (2) et les couches de couverture (3, 4) l'entourant et le cas échéant les couches intermédiaires (10, 11) sont formées respectivement d'un type de couche uniforme.

11. Panneau à base de matériaux (1) selon l'une quelconque des revendications 1 à 9, **caractérisé en ce que** le panneau à base de matériaux (1) comprend au moins deux types de couche différents.

12. Utilisation d'un panneau à base de matériaux (1) pour l'aménagement intérieur de l'habitat, **caractérisée en ce qu'**un panneau à base de matériaux (1) constitué selon l'une quelconque des revendications 1 à 11 est utilisé.

13. Procédé de fabrication d'un panneau à base de matériaux (1), qui comporte un noyau (2) ainsi qu'une première couche de couverture (3) et une deuxième couche de couverture (4), qui sont formées respectivement à partir de particules (5, 6) contenant de la lignine et d'un mélange (7, 8) formant liant, qui est constitué dans un processus de liaison chimique et/ou mécanique en une structure de corps solide sous l'effet de la pression et de la température, sachant que pour former le mélange (7) du noyau (2), des particules (5) sont utilisées, qui sont obtenues pour au moins 70 %, de préférence pour au moins 80 %, de façon toute préférée pour au moins 90 % à partir de plantes annuelles et en ce que pour former le mélange (8) des deux couches de couverture (3, 4) des particules (6) sont utilisées, qui sont obtenues pour au moins 70 %, de préférence pour au moins 80 %, de façon toute préférée pour au moins 90 % à partir du bois.

14. Procédé selon la revendication précédente, **caractérisé en ce que** pour former la structure de corps solides du panneau à base de matériaux (1), le mélange (7) formant le noyau (2) est répandu pour l'essentiel sous une forme apte au ruissellement sur la partie se trouvant sous pression et sous l'effet de la température du processus de liaison chimique et le mélange (8) formant au moins une couche de couverture (3, 4) est introduit pour l'essentiel de façon fluide sous la forme d'un mélange particules-liquide de type bouillie dans la partie se trouvant sous pression et sous l'effet de la température du processus de liaison chimique.

15. Procédé selon l'une quelconque des revendications précédentes, **caractérisé en ce que** pendant le processus de liaison chimique des particules (5, 6) du noyau (2) et d'au moins une couche de couverture (3, 4) se mélangent de telle manière qu'il se crée une couche intermédiaire (10, 11), dont le mélange (9) comporte des particules de plantes annuelles et de particules de bois, dont la proportion en mélange une fois le processus de liaison chimique terminé se situe au moins respectivement à 5 %, de préférence au moins à 10 %, de façon toute préférée au mins à 15 %.

16. Procédé selon l'une quelconque des revendications 13 à 15, **caractérisé en ce qu'**au moins le noyau (2) est introduit précompacté à la partie se trouvant sous pression et sous l'effet de la température du processus de liaison chimique.

17. Procédé selon l'une quelconque des revendications 13 à 16, **caractérisé en ce que** le procédé de fabrication d'un panneau à base de matériaux (1) constitué selon l'une quelconque des revendications 2 à 14 est perfectionné.
